Europäisches Patentamt

European Patent Office

Office européen des brevets

(19)

(11) Veröffentlichungsnummer: **0 023 258**
**B1**

(12) **EUROPÄISCHE PATENTSCHRIFT**

(45) Veröffentlichungstag der Patentschrift:
06.04.83

(21) Anmeldenummer: 80103237.6

(22) Anmeldetag: 11.06.80

(51) Int. Cl.³: **A 01 B 61/04**

(54) Überlast-Sicherheitsvorrichtung für Pflüge.

(30) Priorität: **28.07.79 DE 2930742**

(43) Veröffentlichungstag der Anmeldung:
**04.02.81 Patentblatt 81/5**

(45) Bekanntmachung des Hinweises auf die Patenterteilung:
**06.04.83 Patentblatt 83/14**

(84) Benannte Vertragsstaaten:
**FR GB NL SE**

(56) Entgegenhaltungen:
**DE-A-2 121 555**
**FR-A-2 135 243**
**FR-A-2 255 833**
**FR-A-2 341 254**
**FR-A-2 386 238**
**FR-A-2 419 000**

(73) Patentinhaber: **H. Niemeyer Söhne GmbH & Co. KG,
D-4446 Hörstel (DE)**

(72) Erfinder: **Barlage, Bruno, D-4446 Hörstel (DE)**

(74) Vertreter: **Busse & Busse Patentanwälte, Postfach 1226,
D-4500 Osnabrück (DE)**

ACTORUM AG

## Überlast-Sicherheitsvorrichtung für Pflüge

Die Erfindung bezieht sich auf eine Überlast-Sicherheitsvorrichtung für Pflüge, insbesondere Volldrehpflüge, in einer Ausgestaltung nach dem Oberbegriff des Anspruchs 1.

Bei einer bekannten Vorrichtung dieser Art (DE-A-21 21 555) ist die Kugelpfanne des Kugelgelenkes zwischen dem Druckmittelzylilinder und der Zentrierplatte in Gestalt einer Ausnehmung in der Innenseite der Zentrierplatte ausgeführt. In diese Kugelpfanne greift das kugelige Ende der Kolbenstange des Druckmittelzynders ein. Führt nun der Grindel im Überlastfalle eine aufwärts gerichtete Auslenkbewegung aus, so ist diese auf einen etwa 30° betragenden Maximalwinkel beschränkt, da die Kugelgelenkverbindung zwischen der Zentrierplatte und dem Druckmittelzylinder einen grösseren Schwenkwinkel für die Zentrierplatte ausschliesst. Bei vorgegebener Aushubhöhe für die Scharspitze des Pflugkörpers macht diese Begrenzung des Auslenkwinkels eine Bemessung der Grindellänge erforderlich, welche verhältnismässig gross ist und in unerwünschtem Masse den Abstand zwischen dem Schwerpunkt des Pfluges und dessen Koppelebene vergrössert. Dieser Schwerpunktsabstand zur Koppelebene beeinflusst das um die Achse der Hinderräder des Schleppers wirksame, vom Pflug auf den Schlepper ausgeübte Kippmoment.

Es ist ferner eine Überlast-Sicherheitsvorrichtung für Pflüge (FR-A-23 41 254) bekannt, die mit ihrem Pflugrahmen unmittelbar mit einem Zugfahrzeug verbindbar sind. Zur Herstellung der Verbindung ist das Zugfahrzeug einerseits und das vorder Ende des Pflugrahmens andererseits mit je einem Anschlussstück versehen, von denen das eine in seinem oberen und seinem unteren Bereich Halblager aufweist und von denen das andere mit Achszapfen versehen ist, die in Betriebsstellung des Pfluges in den ihnen jeweils gegenüberliegenden Halblagern aufgenommen sind. Durch ein Zugmittel, das mit seinem vorderen Ende im Anschlussstück des Zugfahrzeugs festgelegt ist, sich in den als Hohlkörper ausgebildeten Pflugrahmen hineinerstreckt und dort an seinem rückwärtigen Ende durche eine Spiraldruckfeder beaufschlagt wird, werden die beiden Anschlussstücke aneinandergepresst. Der Pflugrahmen kann jedoch eine Ausschwenkbewegung ausführen, wenn das in Betriebsstellung befindliche Pflugschar auf einen unvermittelten Widerstand trifft. In diesem Falle bilden die jeweils obenliegenden Halblager und Achszapfen an den Anschlussstücken die Schwenkachse, für die bei Ausschwenkbewegungen aufklappenden Anschlussstücke. Das am Pflugrahmen angeordnete Anschlussstück weist einen nach innen eingezogenen Zentralbereich auf, um zwischen beiden Anschlussstücken Platz für einen zentralen Vorsprung am Anschlussstück des Zugfahrzeugs zu schaffen. Das dem Pflugrahmen zugeordnete, in Richtung zum rückwärtigen Ende des Pflugrahmens konisch zulaufende Anschlussstück ist mit einer zentralen Bohrung zur Aufnahme und Festlegung des vorderen Endes des Pflugrahmens versehen.

Der Erfindung liegt die Aufgabe zugrunde, eine Vorrichtung der eingangs genannten Art zu schaffen, mit deren Hilfe der Abstand des Pflugschwerpunktes zur Koppelebene des Pfluges erheblich verringerbar ist.

Zur Lösung dieser Aufgabe ist die Vorrichtung nach der Erfindung gekennzeichnet durch die im kennzeichnenden Teil des Anspruchs 1 angeführten Merkmale. Hinsichtlich weiterer Ausgestaltungen wird auf die Unteransprüche 1 und 3 verwiesen.

Ein Ausführungsbeispiel des Gegenstands der Erfindung ist in der Zeichnung näher dargestellt. Im einzelnen zeigen:

Fig. 1 eine Draufsicht auf einen Pflug mit einer Überlast-Sicherheitsvorrichtung nach der Erfindung zwischen Pflugrahmen und Grindeln,

Fig. 2 eine Einzeldarstellung einer Überlast-Sicherheitsvorrichtung in einem vertikalen Teilsschnitt,

Fig. 3 einen Schnitt nach der Linie III-III in Fig. 2, und

Fig. 4 eine Darstellung ähnlich Fig. 2 zur Veranschaulichung der Teile in Überlast-Endstellung.

Die Ausgestaltung nach der Erfindung ermöglicht mit überaus einfachen Mitteln der Zentrierplatte und damit dem Grindel aufwärts gerichtete Auslenkbewegungen um einen wesentlich grösseren, z.B. 45°, betragenden Winkel, so dass bei gleichem vorgegebenem Wert für die Aushubhöhe der Scharspitze des Pflugkörpers im Überlastfalle die Baulänge der Grindel wesentlich verringert werden kann und so ein Pflug gebildet ist, dessen Schwerpunktsabstand zur Koppelebene erheblich verkürzt ist.

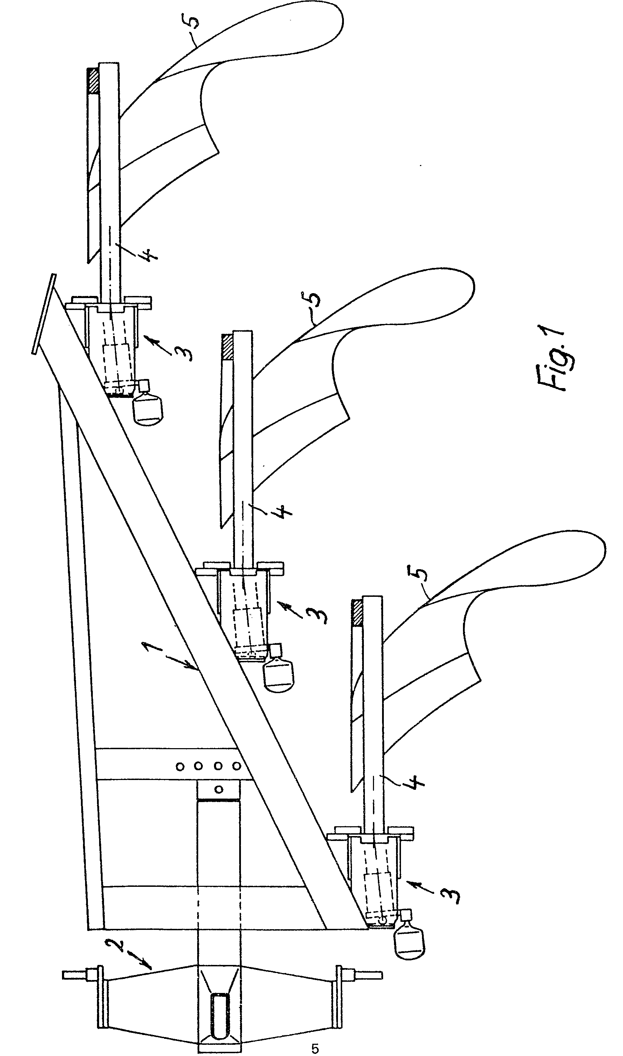

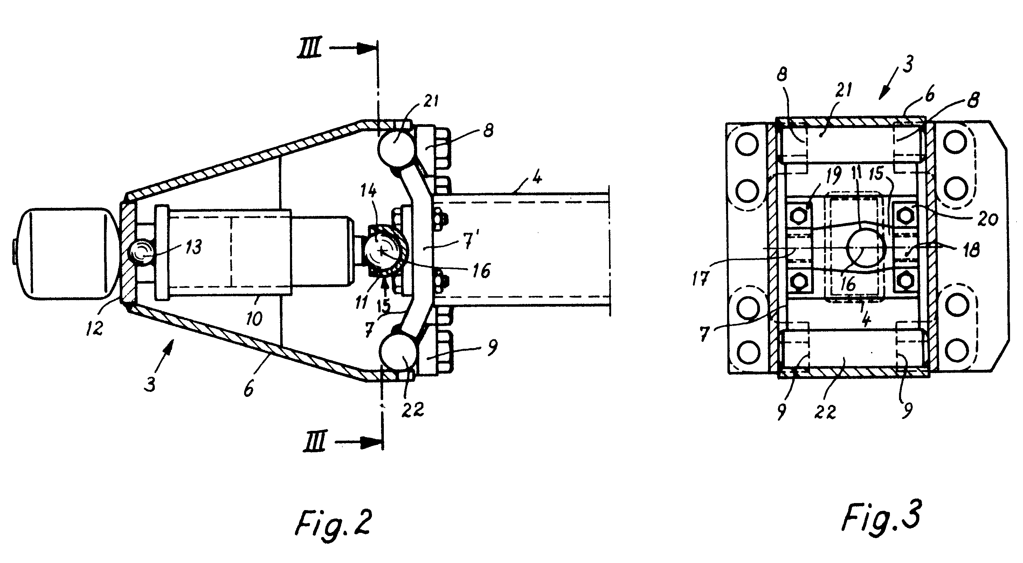

Der in Fig. 1 veranschaulichte Pflug ist als Volldrehpflug ausgebildet und weist einen Pflugrahmen 1 auf, der um einen Pflugachse drehbar von einer Koppel 2 für einen Anbau des Pfluges an die Dreipunkthydraulik eines nicht dargestellten landwirtschaftlichen Schleppers getragen ist. An dem Pflugrahmen 1 sind über Überlast-Sicherheitsvorrichtungen 3 Grindel 4 angeschlossen, an denen Pflugkörper 5 befestigt sind. Wie die Fig. 2 bis 4 näher erkennen lassen, besteht die Überlast-Sicherheitsvorrichtung 3 jeweils aus einem am Pflugrahmen 1 starr befestigten mehreckigen, Gehäuse 6, einer am Grindel 4 starr befestigten mehreckigen, im Gehäuse verlagerbar geführten, jedoch gegen Verdrehen gesicherten Zentrierplatte 7, die in Pflugbetriebsstellung des Pflugkörpers an Gehäuseanschlägen 8, 9 anliegt, sowie aus einem Druckmittelzylinder 10, der sich sowohl an der innenseitig mit einer Kugelpfanne 11 versehenen Zentrierplatte 7, als auch an der dieser gegenüberliegenden Gehäuserückwand 12 über Gelenkkugeln 13, 14 abstützt. Die Kugelpfanne 11 an der Zentrierplatte 7 ist nun an einem Träger 15 befestigt, der um eine etwa hozizontal ausgerichtete Querachse 16 schwenkbar an der Zentrierplatte 7 angelenkt ist. Hierzu weist der Träger 15 Achszapfen 17, 18 auf, die in mit der Zentrierplatte 7 lösbar verschraubten Lagerböcken 19, 20 gelagert sind.

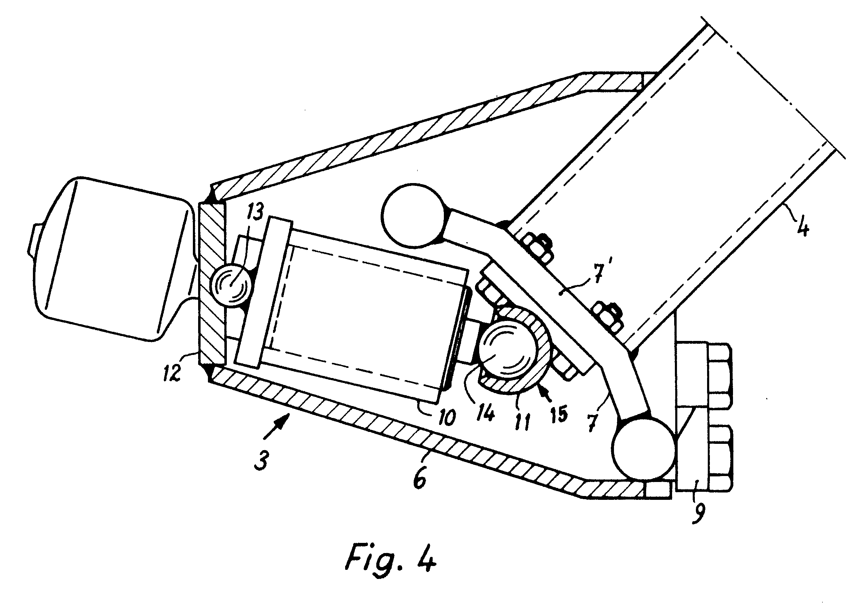

Die Zentrierplatte 7 weist an ihrer oberen und an ihrer unteren Querkante (bei Volldrehpflügen, bei Beetpflügen nur an der Unterkante) einen zylindrischen Abstützkörper 21, 22 auf, der einen die Dikke der Zentrierplatte übersteigenden Durchmesser besitzt. Ferner weist die Zentrierplatte einen mittleren Anschlussbereich 7' für den aussenseitig angreifenden Grindel 4 auf, der eine zum Grindelende hin durch Abkanten versetzte Lage hat. Dies vergrössert den im Gehäuse 6 verfügbaren Platz einerseits und erhöht den Schwenkwinkel, den die Zentrierplatte bei einer Auslenkbewegung unter Überlast ausführen kann. Dies verdeutlicht die Fig. 4, welche die Teile der Vorrichtung in der Überlast-Endstellung veranschaulicht.

## Patentansprüche

1. Überlast-Sicherheitsvorrichtung (3) für Pflüge, insbesondere Volldrehpflüge, die den einen Pflugkörper (5) tragenden Grindel (4) gegenüber dem Pflugrahmen (1) entgegen der Wirkung einer Rückstellkraft aus einer Betriebsstellung auslenkbar abstützt und ein am Pflugrahmen (1) starr befestigtes mehreckiges Gehäuse (6), eine am Grindel (4) starr befestigte, im Gehäuse (6) verlagerbar geführte, jedoch gegen Verdrehen gesicherte mehreckige, in Betriebsstellung des Pflugkörpers (5) an Gehäuseanschlägen anliegende Zentrierplatte (7) sowie einen Druckmittelzylinder (10) umfasst, der sich sowohl an der innenseitig mit einer Kugelpfanne (11) versehenen Zentrierplatte (7), als auch an der dieser gegenüberliegenden Gehäuserückwand über Gelenkkugeln (13) abstützt, dadurch gekennzeichnet, dass die Kugelpfanne (11) an der Zentrierplatte (7) an einem Träger (15) angebracht ist, der um eine etwa horizontal ausgerichtete Querachse (16) schwenkbar an der Zentrierplatte (7) angelenkt ist.

2. Vorrichtung nach Anspruch 1, dadurch gekennzeichnet, dass die Zentrierplatte (7) zumindest an ihrer unteren Querkante einen zylindrischen Abstützkörper (22) mit einem die Dicke der Zentrierplatte (7) übersteigenden Durchmesser aufweist und einem mittleren Anschlussbereich (7') für den aussenseitig angreifenden Grindel (4) versehen ist, der eine nach aussen hin zum Grindel (4) versetzte Lage aufweist.

3. Vorrichtung nach Anspruch 1 oder 2, dadurch gekennzeichnet, dass der Träger (15) für die Kugelpfanne (11) mittels Achszapfen (17, 18) in lösbar an der Zentrierplatte (7) angebrachten Lagerböcken (19, 20) gelagert ist.

## Claims

1. An overload safety device (3) for ploughs particularly full two-way turn-over ploughs, which supports the plough beam (4) carrying a plough body (5) in relation to the plough frame (1) against the action of a restoring force for deflection out of an operating position and comprises a polygonal housing (6) which is rigidly secured to the plough frame (1), a polygonal centring plate (7) which is rigidly connected to the plough beam (4), guided for displacement in the housing (6) but secured against rotation and which, in the operating position of the plough body (5) bears against housing stops, and a pressure-fluid cylinder which is supported both on the centring plate (7) provided with a ball socket (11) at the inside and on the rear wall of the housing situated opposite this, via spherical parts (13, 14), characterised in that the ball socket (11) is mounted on the centring plate (7) on a support (15) which is articulated on the centring plate (7) for pivoting about a transverse axis (16) aligned substantially horizontally.

2. A device as claimed in claim 1, characterised in that the centring plate (7) comprises, at least at its lower transverse edge, a cylindrical supporting member (22) with a diameter exceeding the thickness of the centring plate (7), the centring plate having a central connection region (7') for the plough beam (4), the plough beam (4) engaging the central connection region (7') of the centring plate on its outside, the central connection region (7') being offset towards the outside and towards the plough beam (4).

3. A device as claimed in claim 1 or 2, characterised in that the support (15) for the ball socket (11) is mounted, by means of journals (17, 18) in bearing blocks (19, 20) detachably fitted to the centring plate (7).

## Revendications

1. Dispositif de sécurité (3) de surcharge pour charrue, notamment charrues réversibles, qui assure l'appui d'un timon (4) portant un corps de charrue (5) vis-à-vis du chassis (1) de la charrue avec possibilité de déviation, en opposition à l'action d'une force de rappel, à partir d'une position de service, et qui comporte un carter polygonal (6), une plaque de centrage (7) fixée rigidement sur le timon (4), guidée pour se déplacer dans le carter (6) en étant cependant maintenue contre la rotation, reposant sur des butées du carter dans la position de service du corps de charrue (5), ainsi qu'un vérin sous pression (10), qui s'appuie aussi bien sur la plaque de centrage (7), munie du côté intérieur d'une cuvette sphérique (11), qu'également sur la paroi arrière du carter, située à l'opposé de cette plaque, par l'intermédiaire de billes d'articulation (13), caractérisé en ce que la cuvette sphérique (11) de la plaque de centrage (7) est disposée sur un support (15) articulé sur la plaque de centrage (7), pour pivoter autour d'un axe transversal (16) dirigé de façon sensiblement horizontale.

2. Dispositif selon la revendication 1, caractérisé en ce que la plaque de centrage (7) comporte au moins sur son bord transversal inférieur, un corps d'appui cylindrique (22) avec un diamètre dépassant l'épaisseur de la plaque de centrage (7) et est munie d'une zone de jonction médiane (7') pour le timon (4) raccordé extérieurement, cette zone présentant une position décalée vers l'extérieur en direction du timon (4).

3. Dispositif selon l'une des revendications 1 ou 2, caractérisé en ce que le support (15) pour la cuvette sphérique (11) est monté à rotation au moyen de tourillons (17, 18) dans des selles d'appui (19, 20) disposées de façon amovible sur la plaque de centrage (7).

Fig.1

0 023 258

Fig.2

Fig.3

0 023 258

Fig. 4